# EUROPEAN PATENT APPLICATION

(11) **EP 2 590 461 A1**
(43) Date of publication of application: **08.05.2013**
(21) Application number: 11306445.5
(22) Date of filing: 07.11.2011
(51) Int. Cl.: H04W 72/04, H04W 72/08

(54) **HS-DPCCH transmission method, base station and mobile station to carry out the method**

(71) Applicant: Alcatel Lucent, 75007 Paris (FR)
(72) Inventor: Wong, Shin Horng, Chippenham Wiltshire,SN15 3YB (GB); Dhingra, Vikas, Kundalahalli 560037 Bangalore, Karnataka (IN); Baker, Matthew, Canterbury Kent, CT2 9DB (GB)
(74) Representative: Lück, Stephan

(57) **Abstract**

The present invention relates to the field of wireless cellular communication networks, and more particularly to a transmission method for transmitting a standalone HS-DPCCH information, a base station and a mobile station for carrying out the method. In order to minimize a delay in obtaining an uplink resource for HS-DPCCH, it is suggested that the transmission method comprise: receiving a HS-SCCH order for triggering the standalone HS-DPCCH transmission and going through a preamble phase, said preamble phase being followed by a collision resolution phase, wherein the HS-DPCCH transmission is performed during the collision resolution phase.

## Description

The present invention relates to the field of wireless cellular communication networks, and more particularly to a transmission method, base station and mobile station for carrying out the method.

The term "wireless cellular communication network" as used herein refers to any type of radio (or wireless) cellular network, in particular, GSM ("Global System for Mobile communications"), UMTS (« Universal Mobile Telecommunications System»), CDMA, CDMA 2000 (3GPP2), FDD ("Frequency Division Duplex"), TDD ("Time Division Duplex"), WiMAX, evolved-UTRAN (also known as "Long Term Evolution" or LTE).

The term "mobile station" as used herein refers to any type of fixed or mobile (or portable) communication terminal (such as, for example, portable, pocket, hand-held, computer-included or car-mounted mobile devices) capable of exchanging data with a radio-communication network on a radio-communication link. Consequently, it may be, among other things, a mobile telephone apparatus (also referred to as "cellular phone" or "smartphone"), a laptop computer or personal digital assistant (PDA) equipped with a radio communication interface, a server or local router equipped with a radio communication interface, a high-frequency radio receiver, or a terrestrial or satellite television receiver. In UMTS and LTE systems, the mobile station is referred to as "User Equipment" (UE).

In a typical cellular wireless communication system, mobile stations communicate via a radio access network (RAN) with one or more core networks. The radio access network provides radio coverage spanning a geographical area which is divided into cell areas, with each cell area being served by a radio access node, such as a base station. A cell is a geographical area where radio coverage is provided by a base station equipment at a base station site. The radio access nodes and mobiles stations are adapted for communicating over the air interface when a mobile station is within radio coverage of a cell served by a radio access node or base stations site.

The radio access network infrastructure of a cellular wireless communication system typically comprises base stations distributed over the covered territory for communicating with mobile stations located in the zones, or cells, that they serve.

In the present description, the invention will be described more particularly in its application, non limiting, to third generation communication networks of the UMTS type. In this system, the invention finds application within the framework of the so-called "High Speed Downlink Packet Access" (HSDPA) feature, currently being specified by the 3GPP (3rd Generation Partnership Project), an overall description of which may be found in the 3GPP 25.308 technical specification "UTRA High Speed Downlink Packet Access (HSDPA); Overall Description; Stage 2 (Release 10)", version 10.5.0, published in June 2011 by the 3GPP.

In third generation radio communication networks of the UMTS type, a high-speed data transmission in the up-link direction (from user equipment to the UMTS radio access network) functionality, referred to as HSUPA ("High Speed Uplink Packet Access"), is also available (the HSUPA feature is also named "FDD enhanced uplink" in 3GPP terminology, or "E-DCH" according to the transport channel's name). HSUPA is based on the so-called "E-DCH", a new type of transport channel which also supports hybrid data retransmission request processes of HARQ type, an adaptive coding and modulation mechanism, and base station scheduling of the uplink data transmissions.

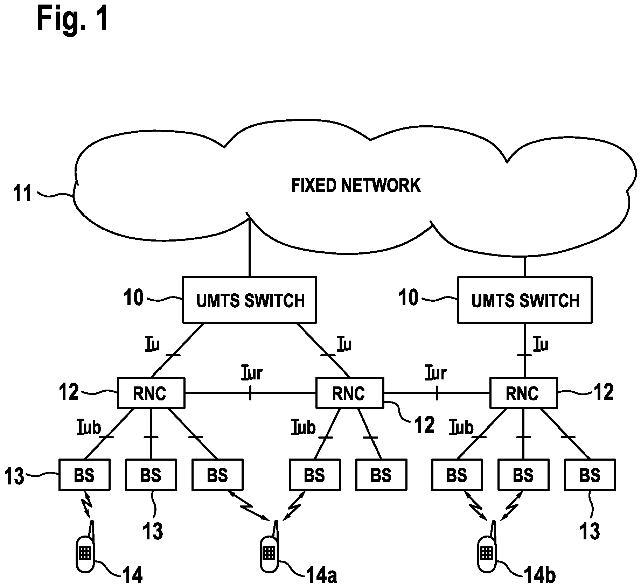

FIG. 1 shows the architecture of such a UMTS network. The switches of the mobile service 10, belonging to a core network (CN), are linked on the one hand to one or more fixed networks 11 and on the other hand, by means of a so-called lu interface, to command equipment 12 or RNCs ("Radio Network Controllers"). Each RNC 12 is linked to one or more base stations 13 by means of a so-called lub interface. The base stations 13, distributed over the territory covered by the network, are capable of communicating by radio with the mobile terminals 14, 14a, 14b called UE ("User Equipment"). The base stations can be grouped together to form nodes called "node B". Certain RNCs 12 may furthermore communicate with one another by means of a so-called lur interface. The RNCs and the base stations form an access network called UTRAN ("UMTS Terrestrial Radio Access Network").

The UTRAN comprises elements of layers 1 and 2 of the ISO model with a view to providing the links required on the radio interface (called Uu), and a stage 15A for controlling the radio resources (RRC, "Radio Resource Control") belonging to layer 3, as is described in the 3GPP TS 25.301 technical specification "Radio Interface Protocol Architecture", version 10.0.0, Release 10, published in March 2011 by the 3GPP. In view of the higher layers, the UTRAN acts simply as a relay between the UE and the CN.

HSDPA allows high rate downlink transmission, i.e. from a base station to a mobile station, of data in respect of a set of mobile stations (UEs) located in the coverage area of the base station. It relies on a time-sharing and code-sharing high-throughput downlink transport channel: the HS-DSCH ("High Speed - Downlink Shared Channel"), which are multiplexed on physical channels HS-PDSCH ("High Speed - Physical Downlink Shared Channel").

UMTS allows a TDD (Time Division Duplex) and an FDD ("Frequency Division Duplex") mode. In the FDD mode, the characteristics of this channel are in particular: (i) a transmission time interval (TTI) of 2 milliseconds corresponding to 3 time slots of 666 µs; (ii) hybrid data retransmission request processes of HARQ type ("Hybrid Automatic Repeat reQuest"); and (iii) an adaptive coding and modulation mechanism.

For HSDPA, at the access network level, a specific sublayer of the medium access control protocol, MAC-hs ("Medium Access Control - high speed"), is localized in the base station. This layer receives data originating from the so-called MAC-d sublayer localized, for its part, in the radio network controller RNC on which the base station depends. Thus, matters are arranged such as to offer an optimum throughput on the HS-DSCH channel. For the same reason, the HS-PDSCH uses a relatively low spreading factor, equal to 16. In a given cell and for a given scrambling code, up to 15 HS-PDSCH channels may be established using orthogonal "channelization" codes. Details regarding medium access control may be found in the technical specification TS 25.321, Release 10, version 10.4.0, published in September 2011 by the 3GPP.

For an HS-DSCH channel, it is necessary to provide one or more specific shared physical control channels called HS-SCCH ("High Speed - Shared Control CHannel"). The signaling information carried by the HS-SCCHs identify the destination terminals of the blocks transmitted on the HS-PDSCHs, and provide them with a certain number of indications useful for the reception of these blocks:
- a transport format and resource indicator (TFRI), giving the information concerning the format of the dynamic part of the HS-DSCH channel, in particular for the modulation scheme employed, and the physical resources allocated ("channelization" codes);
- the information related to the HARQ protocol, in particular the redundancy version, an HARQ process identifier, and an indicator of new data blocks.

Feedback information is moreover returned by the terminal, in particular for the acknowledgements of the HARQ protocol, for the measurements useful for link adaptation. This information is transmitted by a dedicated uplink resource, on a channel dubbed HS-DPCCH ("High Speed - Dedicated Physical Control Channel"). A link adaptation makes it possible to modify the shaping format of the data to be transmitted as a function of the quality of the radio link. For this purpose, a shaping request based on an estimate of the signal-to-interference ratio of the downlink, called CQI ("Channel Quality Indicator"), is periodically returned to the base station by the terminal. The parameter CQI is coded on 30 levels, the gap between two levels corresponding to a gap of 1 dB in the signal-to-interference ratio.

Moreover, each terminal can provide the base station under whose radio coverage it finds itself, by way of the RNC, with information concerning its reception capabilities. It thus indicates to the base station in particular:
- whether it supports the two modulations provided for in the system; namely QPSK ("Quadrature Phase Shift Keying") modulation and 16-QAM ("16-Quadrature Amplitude Modulation") modulation, or else just one of them;
- if its memory allows it to receive data at every TTI, or else every n TTI only, with n an integer;
- if its memory allows it to implement all the possible modes of the HARQ protocol (repetition mode, total or partial Incremental Redundancy mode), or else only some of them.

On setting up the HS-DSCH and HS-SCCHs, the radio network controller which supervises the base station (CRNC, "Controlling RNC") allocates it the corresponding code resources, per cell. By way of example, provision may be made to reserve a list of L = 16 codes with spreading factor 128 for the HS-SCCH channels.

At each TTI, these resources are distributed among various users for which data are to be transmitted. To do this, an allocation of resources is performed by the MAC-hs sublayer of the base station considered.

In networks of the UMTS type, random access follows a procedure defined in the 3GPP technical specification TS 25.214, version 10.4.0, Release 10, published in September 2011 by the 3GPP, section 6. According to this procedure, a UE which desire to initialize a communication, or to transmit information to the UTRAN in idle mode, selects a preamble signature in a pool of available signature for random access. The UE then generates a preamble using the selected signature and sends the preamble on the RACH (Random Access Channel) transport channel (mapped on to the physical channel PRACH - Physical Random Access Channel). The UE then waits for a response from the UTRAN in the form of an Acquisition Indication (AI) or Enhanced Acquisition Indicator (EAI) transmitted by the Node-B on the Acquisition Indicator CHannel (AICH) physical channel.

For HSUPA, at the MAC level, a new MAC termination point, the MACe, has also been introduced in the UTRAN architecture, and more specifically at the base station level. This architecture is described in the 3GPP TS 25.319 technical specification "Enhanced uplink; Overall Description; Stage 2", version 11.1.0, published in September 2011 by the 3GPP.

Two modes of operation have been defined for a user equipment: the Idle mode and the Radio Resource Control (RRC) Connected Mode. In RRC Connected mode, the UE can operate in several states of liaison with the UTRAN, managed by the radio resource management protocol implemented in the RNC and the UE (see technical specification 3G TS 25.331, version 10.5.0, published in September 2011 by the 3GPP). One distinguishes between, on the one hand, common RRC states, which are Cell_FACH, Cell_PCH and URA_PCH, and on the other hand a dedicated RRC state, Cell_DCH. Cell_DCH state is one of the states within RRC Connected Mode where user equipment can transmit and receive high data throughput. In this state user equipment and Node B maintain physical layer synchronisations in the uplink and downlink. The HSDPA feature may operate in Cell_DCH state, but also in other states such as Cell_FACH as of Release 7. The modes and states for the UE in WCDMA are defined in the above-mentioned specification 3GPP TS 25.331.

The uplink HS-DPCCH (High Speed Dedicated Physical Control Channel) feedback channel is critical to support efficient downlink transmission on the high-speed channels. In the absence of Channel Quality Information (CQI) and downlink ACK/NACK information that are carried over HS-DPCCH channel, blind retransmissions on the HSDPA channel lead to significant loss in HSDPA throughput and highly inefficient utilization of the HSDPA resources.

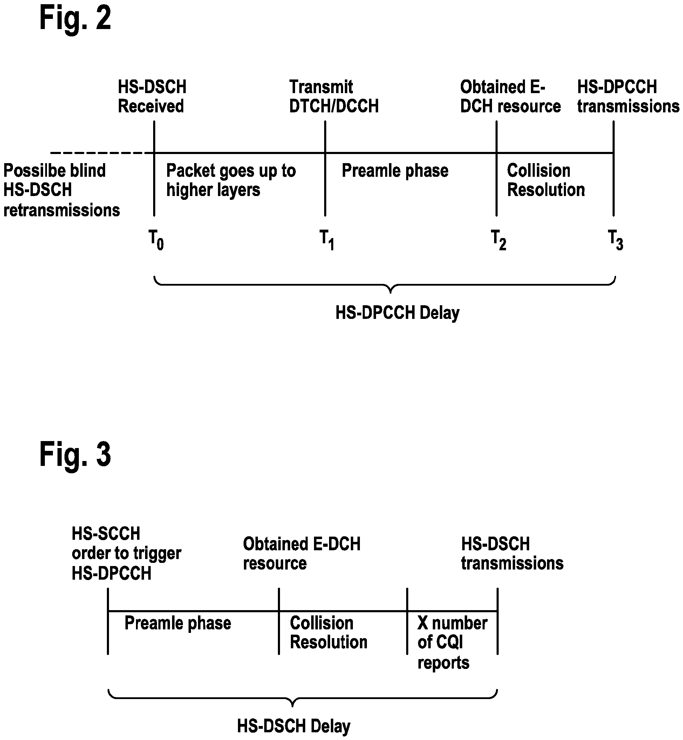

As defined in the Release 8 specifications, the transmission of HS-DPCCH in Cell_FACH state is triggered by uplink data transmission, i.e. may occur if and when the UE has data to send on the E-DCH channel. Figure 2 shows a typical process in transmitting on the HS-DPCCH channel. After a HS-DSCH packet is received, this packet goes up to higher layers where an acknowledgement at the higher layer is triggered thereby generating uplink transmission. The UE then goes through a so-called "preamble phase" to obtain E-DCH resources, which so-called preamble phase is followed by a so-called "collision resolution phase". The collision resolution is to resolve the situation where more than one UE attempt to access the network using the same resources, i.e. uses the same preamble signature, which leads to more than one UE using the same common E-DCH resource. As shown in Figure 2, there is a delay between the UE receiving the first HS-DSCH packet and transmitting its first HS-DPCCH.

The so-called "stand-alone HS-DPCCH" is a new feature which is currently being defined by the 3GPP within the framework of the development of Release 11 specifications, in which transmission occurs on the HS-DPCCH channel without an ongoing E-DCH transmission. In other words, this new feature would allow for a standalone HS-DPCCH channel to be established based on conditions other than the transmission of data in the uplink. According to the current state of definition of this feature, the standalone HS-DPCCH transmission would be triggered by an HS-SCCH order.

Significant gains can be achieved if the CQI feedback information is available for all HS-DSCH transmissions in Cell_FACH state compared to scenarios where there is a delay in getting CQI feedback information after transmission of some data on the HS-DSCH channel. In a radio access network which is adapted for using an HS-SCCH order to trigger standalone HS-DPCCH transmissions, an HS-SCCH order can be used to trigger for HS-DPCCH transmission prior to any HS-DSCH transmission.

In order to achieve this, the Node-B can be adapted for delaying each HS-DSCH transmission until it has triggered and obtained a CQI report (alternatively the Node-B could be adapted to try to predict the arrival of each HS-DSCH packet and trigger a CQI report early).

For a Node-B adapted to delay each HS-DSCH transmission so that it can trigger for HS-DPCCH and obtain some CQI reports, the total delay will include the NB sending a HS-SCCH order, the UE going through the preamble and collision resolution phases and the NB obtaining X number of CQI reports as shown in FIG. 3. The number of CQI reports X may be equal to one (corresponding to one CQI report), or greater than one, in which case several CQI reports are processed to obtain an average. Simulations have shown that the preamble and collision resolution phases would introduce a delay of the order of 50 ms. It should also be noted that there may be HS-DSCH packets for more than 1 UE and hence the Node-B may be unable to schedule a HS-DSCH transmission to a UE immediately after obtaining a CQI, for example, the Node-B may decide to schedule the packet to another UE with a better CQI and the UE that is not scheduled may be required to go through the preamble and collision resolution phases again when the Node-B considers to schedule a packet to it in the near future (i.e. the delay can be compounded). Furthermore, there may not be HS-SCCH resource when the Node-B wishes to send a HS-DSCH and this can add to the delay.

It is therefore desirable to provide ways to implement this standalone HS-DPCCH feature which allow for this feature to be used efficiently, in particular with a reduced delay.

Indeed, for Node-Bs that implement the delaying of HS-DSCH transmission for awaiting for CQI report feedback information (in order to minimise the up-link overhead), the delay in obtaining an uplink resource for HS-DPCCH transmission should be minimised.

Bypassing the preamble phase by including the index to the common resource within the HS-SCCH order itself was proposed and considered. This theoretically removes both the preamble and collision resolution phases. However, the UE still requires to be synchronized and achieve the right transmission power in order to transmit the HS-DPCCH. Furthermore, one could argue that bypassing the preamble phase does not significantly reduce the preamble delay, but has the cost of introducing extra complexity at the Node-B in detecting for of DPCCH. A proposal which involves a bypass of the preamble procedure would therefore have the drawbacks described above.

A improved transmission method is provided herein wherein the PRACH preamble power ramping procedure is reused in obtaining the first common uplink resource for HS-DPCCH transmission. According to this transmission method, an index to the common resource is included in the HS-SCCH order to the UE and the UE goes through the preamble phase corresponding to that common resource index. In this case, other UEs may randomly pick the same preamble as the one corresponding to that ordered by the HS-SCCH. The UE to which the HS-SCCH order is sent will transmit HS-DPCCH after completing the preamble phase, while other UEs using the same preamble signature will not transmit on the HS-DPCCH channel (but only on the E-DCH channel). The proposed method therefore also includes a collusion resolution phase during which the UE that received the order is distinguished from another UE which did not receive the order but used the same common resource index, by the fact that the UEs transmit a different channelization code. Hence, the Node-B, responsive to the detection of an HS-DPCCH transmission can resolve the contention by detecting the HS-DPCCH and E-DCH in parallel, and can still send the E-AGCH with the targeted E-RNTI (i.e. the UE ordered to transmit HS-DPCCH). This method does not avoid collision resolution but allows the UE to transmit HS-DPCCH after the preamble phase.

According to one embodiment, the HS-SCCH order includes an indicator of the preamble signature that the UE can use for its initial access. It should be noted that there is no requirement that the preamble signature comes from a reserved set, i.e., there is according to the proposed method no need to reserve any preamble signature. Also, as noted above, the UE does not by-pass the preamble phase. The proposed method also includes a collusion resolution phase during which the UE that received the order is distinguished from at least one other UE which did not receive the order but transmitted the same preamble signature, by the fact that the UEs transmit a different channelization code. According to this embodiment, only the UE that received the order transmits HS-DPCCH (using a channelization code associated with HS-DPCCH transmission) whilst the other UEs that do not receive the order transmit E-DCH (using a channelization code associated with E-DCH). This aspect recognizes that HS-DPCCH uses a different channelization code from those used by the physical channels (E-DPDCH and E-DPCCH) in E-DCH. The Node-B can therefore distinguish the UE by the detection of HS-DPCCH.

Alternatively, it is possible for the UE that has received the order to transmit E-DCH as well as HS-DPCCH during the collision resolution phase. However the E-DCH may suffer interference from other (unintended) UEs' E-DCH transmissions using the same resource.

For the UEs which do not receive the order, the Node-B can confirm its authorisation to transmit on the selected E-DCH resource by using the legacy procedure of sending an E-AGCH with a single targeted UE ID. Such UE ID could be for example the E-RNTI, i.e. E-DCH Radio Network Temporary Identifier, which is allocated by the Node-B responsive to an UE request for establishing an E-DCH channel. It may also be the H-RNTI, i.e. HS-DSCH Radio Network Transaction Identifier, which is allocated by the controlling RNC responsive to an UE request for establishing a HS-DSCH channel. This aspect recognizes that in some scenario a E-RNTI may not be available at the Node-B, therefore the UE is in such case adapted for being capable of recognizing that the NB may send a different type of ID (from E-RNTI) to end the contention resolution. In the event that more than one of these other UEs use the same preamble signature for their access request to the network, this E-AGCH also serves the purpose of resolving the collision between those other UEs and stops all but one of them from further using the common resource. Alternatively, the Node-B can confirm the transmission of one of the other UE(s) by sending an E-AGCH with the ID of that UE - i.e. not the ID of the UE that received the order. This allows both the HS-DPCCH and E-DCH to be received from different UEs at the same time.

According to one embodiment, the indicator of the preamble signature comprises an indicator of a common E-DCH resource index associated with the intended preamble signature by a one-to-one mapping.

According to another embodiment, the Node-B indicates an E-DCH resource index in the Extended Acquisition Indicator (EAI) sent in response to the preamble on the Acquisition Indicator CHannel (AICH) that is different from the one included in the HS-SCCH order. This aspect recognizes that the UE needs to transmit uplink DPCCH (pilot) for channel estimation and synchronization purposes. Here the UE that received the HS-SCCH order will use the resource index indicated in that order, while the other UE(s) will follow the legacy procedure and use a different resource index through the EAI carried on the AICH.

According to yet another embodiment, a UE which receives the order and starts transmitting on HS-DPCCH sets a timer when it starts transmitting on HS-DPCCH after the preamble phase. If the timer expires and the UE has not receive an E-AGCH (i.e. absence of E-AGCH), it stops HS-DPCCH transmission and release the common resource.

According to yet another embodiment, if a UE has an existing E-DCH transmission and receives a HS-SCCH order to trigger for HS-DPCCH transmission, it may use same preamble signature as received in HS-SCCH order for request of common E-DCH resource (to transmit UL E-DCH data and HS-DPCCH). In this case, the UE and Node B may use HS-DPCCH based contention resolution procedure as proposed herein rather than the legacy E-DCH-based contention resolution procedure. However, the common E-DCH resource index indicated through HS-SCCH order and thus, used by UE, may be used for UL E-DCH and HS-DPCCH transmission. This basically allows the Node B to change the UE common resource index. Secondly, in this case, the UE may not send E-RNTI in Mac-I header as contention is already resolved.

The following provides examples of use of the method proposed herein, illustrated by the appended drawings.

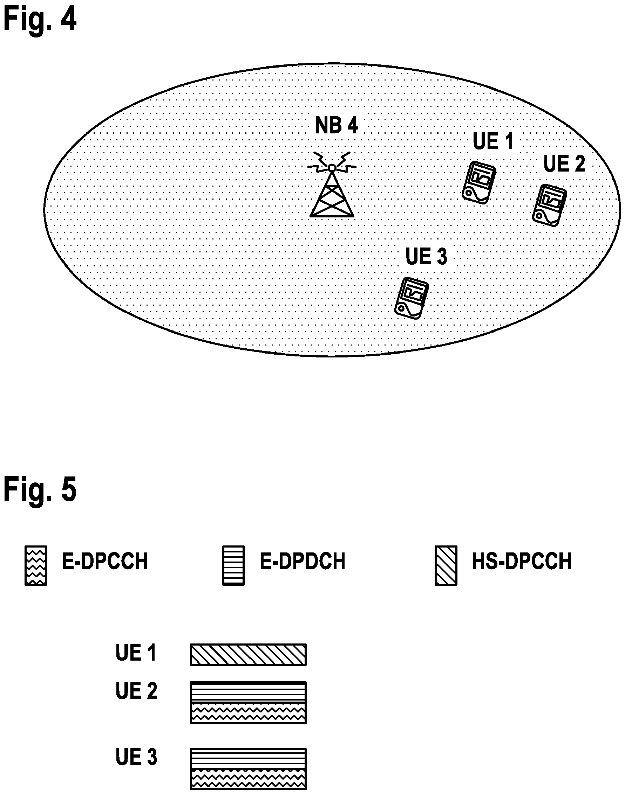

Figure 4 illustrates an exemplary scenario described below according to the proposed method with 3 UEs performing access to the Node-B. Figure 5 illustrates channels transmitted by the 3 UEs (UE1, UE2 and UE3) during the collision resolution phase according to the scenario illustrated by Figure 4.

The Node-B 4 on Figure 4 is part of a radio access network of a UMTS system, and connected to nodes thereof (such as other Node-Bs and RNCs) which are not shown on the figure for simplicity. The three UEs illustrated on Figure 4 have established an RRC connection with the Node-B 4, and are therefore connected to this Node-B.

The Node-B 4 sends a HS-SCCH order to UE 1 to trigger for standalone HS-DPCCH feedback from UE 1. The HS-SCCH order sent by the NB includes common E-DCH resource index 5, so that UE 1 uses the scrambling code corresponding to that in the common E-DCH resource indicated by index 5. Each common E-DCH resource corresponds to a specific preamble signature. UE 1 therefore knows which preamble signature to use (in this example preamble signature number 5). After receiving the HS-SCCH order, UE 1 starts the preamble phase by transmitting preamble signature number 5 to determine the power level required to transmit uplink packets.

Meanwhile UE 2 and UE 3 that are not triggered for HS-DPCCH transmission, decide to access the network for an E-DCH resource and, following the legacy random access procedure, happen to select preamble signature 5 for their preamble phase thereby causing a collision. The Node-B 4 receives the preamble signature 5 and sends on the AICH a positive response with an EAI pointing to resource index 8. The UEs then use the following resource index, respectively: UE 1 uses resource index 5 (as per the HS-SCCH order), UE 2 uses resource index 8, and UE 3 also uses resource index 8.

UE 2 and UE 3 transmit E-DCH packets (which contain their respective E-RNTI). UE 1 transmits HS-DPCCH, which uses a different channelization code from those used by the E-DCH transmission physical channels (E-DPCCH & E-DPDCH) as shown in Figure 5. Since only one UE (i.e. the targeted UE 1) transmits HS-DPCCH using the scrambling code indicated by common resource index 5 whilst the other UE transmit only E-DCH using the other common resource index 8, the Node-B 4 can detect the HS-DPCCH transmission and is adapted therefor. Once a HS-DPCCH transmission is detected, the Node-B 4 sends an E-AGCH with UE 1's E-RNTI to end the collision resolution phase.

Another example of use of the method proposed herein is described in the following:

It is also assumed here that the three UEs illustrated on Figure 4 have established an RRC connection with the Node-B 4, and are therefore connected to this Node-B. The Node-B 4 sends the following order to trigger for HS-DPCCH transmission: HS-SCCH order to UE 1 with common resource index 7, and HS-SCCH order to UE 2 with common resource index 9. Assuming that common resource index 7 corresponds to preamble signature 7 and scrambling code 7, and that common resource index 9 corresponds to preamble signature 9 and scrambling code 9, UE 1 and UE 2 start preamble phase with preamble signature 7 and 9 respectively. Meanwhile UE 3 decides to access the network and randomly selected preamble signature 9 thereby causing a collision with UE 2. After the preamble phase, the following are transmitted during the collision resolution phase: on scrambling code 7, HS-DPCCH (by UE 1) is transmitted, and on scrambling code 9, HS-DPCCH (by UE 2) and E-DCH (by UE 3) are transmitted.

Since the Node-B expects UE 1 to transmit HS-DPCCH using common resource 7 (i.e. on scrambling code 7), the Node-B 4 can induced that the HS-DPCCH transmission using common resource 7 is from UE1. Similarly the Node-B 4 expects the UE 2 to transmit HS-DPCCH using common resource 9 (i.e. on scrambling code 9). However, here the Node B 4 detects an HS-DPCCH signal and also an E-DCH signal transmitted using this resource. Since the Node-B knows that only the targeted UE (i.e. UE 2) would transmit HS-DPCCH using this common resource, it sends an E-AGCH with UE 2's E-RNTI to end the collision resolution phase.

In both examples, the UEs receiving the HS-SCCH order are able to transmit HS-DPCCH with reduced delay as compared to other proposed procedures.

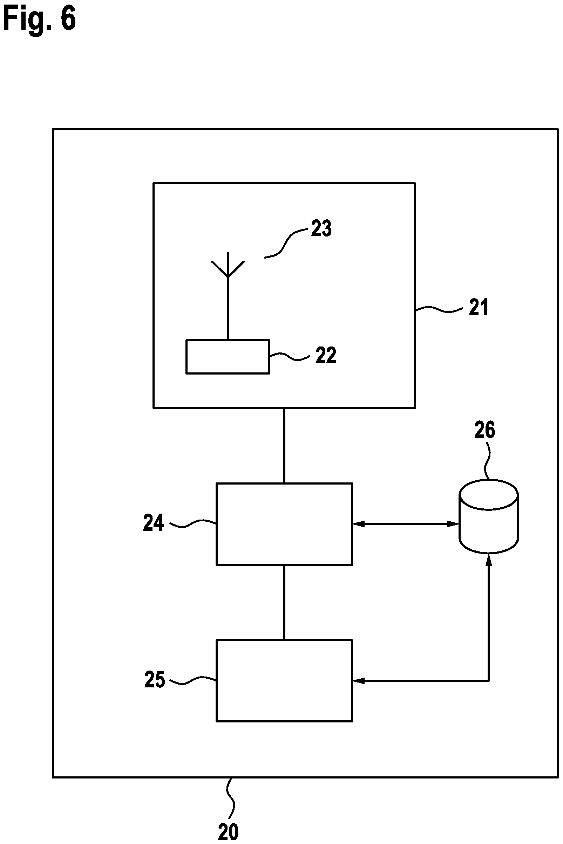

Figure 6 shows a block diagram of an exemplary embodiment of a UE 20 adapted for implementing the methods proposed herein. UE 20 includes a radio module 21, which comprises a transmitter/receiver sub-module 22 connected to antenna means 23 for transmission/reception of radio signals to/from Node-Bs. The transmitter/receiver sub-module 22 performs functions such as filtering, amplifying, frequency conversion, digital-to-analog conversion, etc. The radio module is connected to a control module 24, which includes a processor and is itself connected to a modem module 25 and a memory 26. The control module manages the operation of the UE 20 and performs processing tasks, including as defined by the various methods proposed herein. The memory 26 stores computer programs and data used by the control module 24 and the modem module 25. The modem module performs functions such as source coding, interleaving, channelization, modulation, demodulation, de-interleaving, source decoding, estimation.

The methods proposed herein include parts that may be implemented in a UE such as the one described above, in software stored in memory 26 and executed in the control module 24. Similarly, those methods include parts that may be implemented in software form, such software being executed on a processor of a Node-B.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the FIGs., including any functional blocks referred to or labeled as "processor", "controller" or "control module", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor", "control module" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

## Claims

1. Transmission method for transmitting a standalone HS-DPCCH information, the method comprising
- receiving a HS-SCCH order for triggering the standalone HS-DPCCH transmission; and
- going through a preamble phase, said preamble phase being followed by a collision resolution phase;
wherein the HS-DPCCH transmission is performed during the collision resolution phase.

2. Method according to claim 1, wherein the HS-DPCCH order includes a resource index to a common resource.

3. Method according to claim 2, wherein the method comprises going through the preamble phase corresponding to the resource index, preferably by using a scrambling code corresponding to the common resource indicated by the resource index.

4. Method according to one of the preceding claims, wherein the HS-SCCH order includes an indicator of a preamble signature to be used for an initial access.

5. Method according to claim 4, wherein the indicator of the preamble signature comprises an indicator of a common E-DCH resource index by a one-to-one mapping.

6. Mobile station (14, 14a, 14b, 20, UE) for a wireless network, wherein the mobile station (14, 14a, 14b, 20, UE) is operable to carry out a method according to one of the precedent claims.

7. Transmission method for receiving a standalone HS-DPCCH information, the method comprising
- transmitting a HS-SCCH order for triggering the standalone HS-DPCCH transmission; and
- going through a preamble phase, said preamble phase being followed by a collision resolution phase;
wherein the HS-DPCCH transmission is performed during the collision resolution phase.

8. Method according to claim 7, wherein the HS-DPCCH order includes a resource index to a common resource.

9. Method according to claim 8, wherein the method comprises going through the preamble phase corresponding to the resource index, preferably by using a scrambling code corresponding to the common resource indicated by the resource index.

10. Method according to one of claims 7 to 9, wherein the HS-SCCH order includes an indicator of a preamble signature to be used for an initial access.

11. Method according to claim 10, wherein the indicator of the preamble signature comprises an indicator of a common E-DCH resource index by a one-to-one mapping.

12. Base station (13, NB) for a wireless network, wherein the base station (13, NB) is operable to carry out a method according to one of claims 7 to 11.
